Europäisches Patentamt
(19) European Patent Office
Office européen des brevets

(11) Numéro de publication : **0 270 653 B1**

# (12) FASCICULE DE BREVET EUROPEEN

(45) Date de publication du fascicule du brevet :
05.06.91 Bulletin 91/23

(51) Int. Cl.⁵ : **B65B 55/10**

(21) Numéro de dépôt : **87904225.7**

(22) Date de dépôt : **23.06.87**

(86) Numéro de dépôt international :
**PCT/BE87/00009**

(87) Numéro de publication internationale :
**WO 88/00158 14.01.88 Gazette 88/02**

(54) **DISPOSITIF POUR NETTOYER ET/OU DECONTAMINER EN CONTINU UNE BANDE D'UN FILM EN MATIERE THERMOPLASTIQUE.**

(30) Priorité : 26.06.86 BE 216844

(43) Date de publication de la demande :
15.06.88 Bulletin 88/24

(45) Mention de la délivrance du brevet :
05.06.91 Bulletin 91/23

(84) Etats contractants désignés :
CH DE FR GB LI SE

(56) Documents cités :
FR-A- 2 043 839
FR-A- 2 352 711
FR-E- 94 398

(73) Titulaire : BAXTER INTERNATIONAL INC. (a
Delaware corporation)
One Baxter Parkway
Deerfield Illinois 60015 (US)

(72) Inventeur : SOUBRIER, Pierre
62, boulevard Louis Schmidt
B-1040 Bruxelles (BE)
Inventeur : DESMET, Bernard
Oudestraat 122
B-9600 Renaix (BE)

(74) Mandataire : De Brabanter, Maurice et al
Bureau VANDER HAEGHEN 63 Avenue de la
Toison d'Or
B-1060 Bruxelles (BE)

**Description**

La présente invention est relative à un dispositif de nettoyage et/ou de décontamination d'une bande continue d'un film thermoplastique, ce dispositif comprenant une enceinte dans laquelle la bande continue est amenée à se déplacer selon un trajet sinueux autour de rouleaux de renvoi entre une entrée et une sortie de l'enceinte, au moins une rampe sensiblement horizontale munie de gicleurs étant montée dans l'enceinte susdite de manière à permettre de pulvériser sur au moins une face de la bande des jets d'un liquide de nettoyage et/ou de décontamination, ce liquide chargé de particules contaminantes détachées de la bande s'égouttant dans un collecteur dont est munie l'enceinte à sa partie inférieure, l'enceinte étant maintenue sous une pression d'air stérile. Un tel dispositif est connu par le document FR-A-2 043 839.

Elle concerne, plus particulièrement, bien que non exclusivement, un dispositif pour nettoyer les deux faces opposées d'une bande continue d'un film en matière thermoplastique, par exemple une bande constituée d'au moins une couche d'une matière polyoléfinique, telle que le polyéthylène ou le polypropylène, en vue notamment de l'utilisation de cette bande nettoyée pour la fabrication de sachets souples contenant un liquide de perfusion à administrer par la voie intraveineuse à un patient.

Les fabricants de films en matière thermoplastique, par exemple en polyéthylène, livrent ceux-ci sous forme de rouleaux de largeur prédéterminée. Au cours de la fabrication de ces films, par exemple par extrusion, et au cours de leur conditionnement, par exemple leur sectionnement à la largeur voulue et leur enroulement sur un mandrin, de même qu'au cours de leur transport, de leur manipulation et de leur traitement, ces films sont généralement contaminés par des particules de nature extrinsèque ou par des particules ou fragments provenant des films eux-mêmes.

Lorsque ces films sont destinés à la fabrication de sachets ou poches souples contenant des liquides de perfusion, il importe qu'ils soient débarrassés des particules contaminantes qui y adhèrent et qui risquent de créer des accidents si elles sont entraînées avec le liquide de perfusion dans le système circulatoire des patients.

Il importe également que la face du film, avec laquelle le liquide de perfusion est en contact, soit stérile, de façon à éviter l'entraînement de germes ou micro-organismes éventuellement pathogènes avec le liquide de perfusion dans le système circulatoire des patients.

On connaît un système de nettoyage et de stérilisation en continu d'une bande d'un film en matière thermoplastique, dans lequel on fait passer cette bande dans un bain statique d'un liquide qui peut, par exemple, être un liquide stérilisant, tel que l'eau oxygénée. Ce système connu ne permet souvent pas de détacher convenablement les particules pouvant adhérer au film et il présente aussi l'inconvénient de nécessiter un remplacement périodique de bain qui se charge progressivement de particules et de micro-organismes et doit donc être renouvelé.

On connaît également par les documents FR-A-94.398, FR-A-2.352.711 et FR-A-2.043.839 divers dispositifs de nettoyage et de décontamination.

Ainsi, le document FR-A-94.398 enseigne un dispositif comprenant une chambre dans laquelle se déplace verticalement un film à nettoyer, au moins deux rampes de pulvérisation de liquide sur les faces du film et un bac destiné à récolter le liquide pulvérisé. Dans ce dispositif connu, le traitement du film s'opère dans une atmosphère non stérile.

Le document FR-A-1.351.711 décrit un dispositif destiné à stériliser une bande dans une chambre. Ce dispositif comprend des vaporisateurs destinés à vaporiser une solution stérilisante sous la forme d'une fine pellicule sur la bande. La bande suit dans la chambre un parcours sensiblement incliné entre un rouleau inférieur et des cylindres essoreurs.

Dans ce dispositif, le traitement n'est pas effectué sous atmosphère inerte.

Enfin, on connaît, par le document FR-A-2.043.839, un procédé et un appareil pour l'élimination combinée mécanique et chimique ou bactériologique d'impuretés ou de produits chimiques à la surface d'une bande. Dans des formes de réalisation, l'appareil comprend des brosses pour le traitement mécanique d'une bande mise en mouvement, des dispositifs d'alimentation dirigés chacun vers une face de la bande de manière à former des rideaux de matières pulvérisées allant à contre-courant par rapport à la direction de mouvement de la bande. Dans une forme de réalisation, l'appareil comprend un récipient contenant un liquide dans lequel plonge la bande à traiter, ce récipient étant muni d'un couvercle de manière à délimiter un espace isolé de l'atmosphère et pouvant être relié à des passages contenant un milieu gazeux stérile. Dans cet espace sont disposées les brosses ainsi que les dispositifs de pulvérisation.

Cet appareil connu ne présente pas de fente de largeur réglable servant à l'échappement contrôlé du milieu gazeux stérile, cette fente étant ménagée entre l'extrémité inférieure de l'enceinte et du collecteur.

La présente invention a pour objet un dispositif décrit dans le premier paragraphe du présent mémoire, ce dispositif étant caractérisé en ce que l'enceinte présente une fente de largeur réglable servant à l'échappement contrôlé de l'air admis dans l'enceinte par le plafond de celle-ci, cette fente étant ménagée entre l'extrémité inférieure de l'enceinte et le collecteur.

L'élimination des particules et autres matières contaminantes d'un film en matière thermoplastique, dont la nature est telle qu'il attire et retient de telles particules du fait qu'il est souvent chargé d'électricité statique, se fait de manière très efficace lorsqu'on pulvérise sur le film, pendant que celui-ci avance dans une direction déterminée, un liquide sous forme de jets dirigés sensiblement dans une direction opposée à celle de l'avancement du film. On obtient de cette manière un effet dynamique qui favorise le détachement des particules et autres matières contaminantes.

D'autre part, pour que les particules et autres matières contaminantes soient aisément détachées du film et ne se redéposent plus sur celui-ci, il convient de pulvériser le liquide sur le film pendant que celui-ci suit un trajet fortement incliné, sinon sensiblement vertical.

Dans une forme de réalisation, le dispositif comporte deux rouleaux de renvoi distants l'un de l'autre à la partie inférieure de l'enceinte, et deux rouleaux de renvoi également espacés l'un de l'autre à la partie supérieure de l'enceinte, de façon qu'en passant sur ces divers rouleaux de renvoi, la bande de film présente trois tronçons successifs, à savoir un premier tronçon incliné qui est soumis à la pulvérisation d'un ou de liquides de nettoyage et/ou de décontamination, un deuxième tronçon sensiblement horizontal et un troisième tronçon sensiblement vertical ou légèrement incliné.

Selon une particularité de l'invention, les gicleurs de la ou des rampes sont inclinés vers la bande de film, de manière à former avec celle-ci un angle de 30 à 90°, de préférence, 45 à 60°.

Selon une autre particularité de l'invention, des moyens sont prévus pour régler l'orientation des gicleurs des rampes, tandis que des moyens peuvent également être prévus pour régler le niveau des rampes ainsi que leur distance vis-à-vis de la bande. Par ailleurs, les rampes peuvent être également réglables longitudinalement (c'est-à-dire dans la direction de leur axe).

Sous une forme de réalisation, à sa partie supérieure, l'enceinte présente un plafond présentant de multiples perforations livrant passage à de l'air stérile constituant une atmosphère d'air conditionné dans l'enceinte, tandis qu'à sa partie inférieure, l'enceinte est pourvue d'un collecteur du ou des liquides pulvérisés sur la bande. Ce collecteur se présente sous forge d'une trémie. Une fente de largeur réglable est prévue entre le bord inférieur de l'enceinte et le bord supérieur de la trémie, cette fente permettant l'échappement, à un débit prédéterminé, de l'air contenu dans l'enceinte, de sorte qu'une circulation d'air est établie dans celu-ci, la pression de cet air étant, au niveau de son entrée (plafond) dans l'enceinte, de quelques centimètres, par exemple 2 à 4 centimètres, de colonne d'eau.

Les rouleaux de renvoi sur lesquels passe la bande du film dans l'enceinte tournent librement et sont du type cage d'écureuil.

En aval de l'enceinte, dans le sens de déplacement de la bande de film thermoplastique, cette bande est tirée par passage entre deux rouleaux, dont l'un est entraîné par un moteur électrique. L'un de ces rouleaux est revêtu de caoutchouc ou d'une matière plastique.

D'autres particularités et détails de l'invention ressortent de la description détaillée suivante des dessins ci-annexés, qui illustrent schématiquement et à titre d'exemples seulement des formes de réalisation d'un dispositif suivant l'invention. Dans ces dessins :

– la figure 1 est une vue schématique en élévation latérale d'une première forme de réalisation du dispositif suivant l'invention ;

– la figure 2 est une vue schématique, également en élévation latérale, d'une seconde forme de réalisation du dispositif suivant l'invention ;

– la figure 3 est une vue en élévation latérale plus détaillée de la deuxième forme de réalisation du dispositif suivant l'invention illustrée à la figure 2;

– la figure 4 est une vue schématique en élévation latérale d'une troisième forme de réalisation d'un dispositif suivant l'invention ;

– la figure 5 est une vue similaire à celle de la figure 1 d'une quatrième forme de réalisation d'un dispositif suivant l'invention ;

– la figure 6 est, à plus grande échelle, une vue de détail d'une partie du dispositif montré à la figure 3, et

– la figure 7 est une vue en perspective montrant un rouleau de renvoi et une rampe de pulvérisation d'un liquide de nettoyage.

Dans ces différentes figures, les mêmes notations de référence désignent des éléments identiques.

Les dispositifs de nettoyage ou de décontamination décrits ci-après font avantageusement partie d'une installation de fabrication de sachets ou poches souples pour l'écoulement lent de liquides, notamment de sachets contenant des liquides physiologiquement acceptables destinés à être administrés à des patients par la voie intraveineuse. Une telle installation comprend essentiellement un poste de déroulement d'une bande de film en matière thermoplastique d'un rouleau d'alimentation, un poste d'impression d'informations sur une face de la bande, un poste de perforation de trous dans la bande, ces trous étant destinés à recevoir des tubulures, et un poste de fabrication des sachets poches par soudage, par exemple de la manière décrite dans le document FR-A-2528801. Dans cette installation, un dispositif de nettoyage ou de décontamination suivant la présente invention est monté juste en amont du poste de fabrication des sachets.

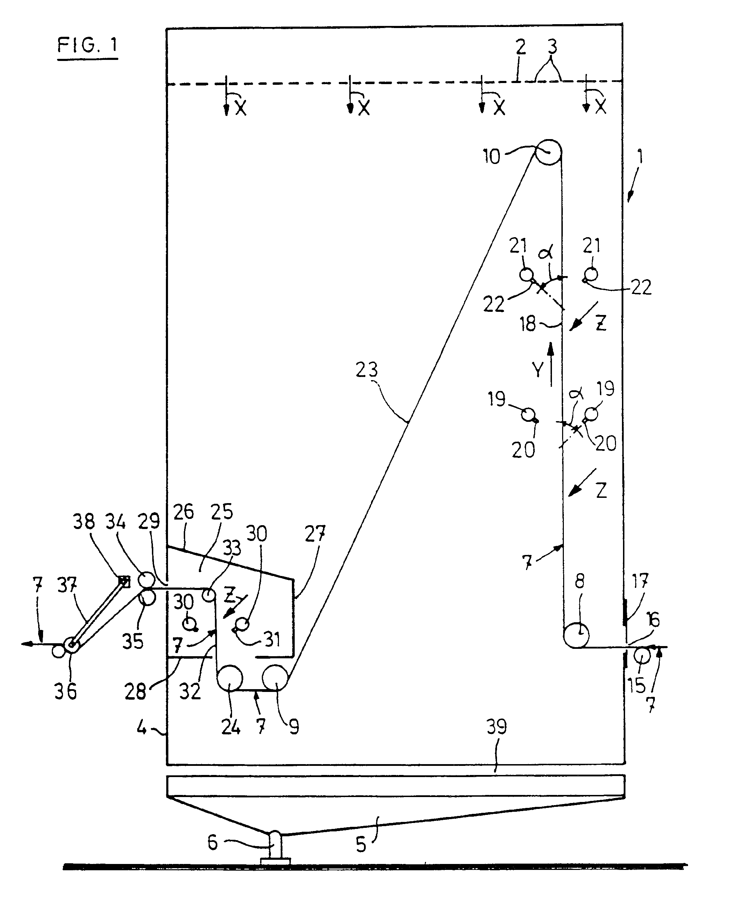

Dans une première forme de réalisation, illustrée à la figure 1, du dispositif suivant l'invention, celui-ci comprend une enceinte 1 comportant un plafond 2 présentant une multitude de perforations 3, par lesquelles de l'air stérile en provenance d'une source (non montrée) est insufflé, dans la direction des flèches X, dans toute la section transversale de l'enceinte 1. La pression de cet air, dans l'enceinte 1, est de quelques centimètres de colonne d'eau, par exemple de 2 à 4 cm. Grâce à cette légère surpression d'air dans l'enceinte 1, la pénétration dans celle-ci d'air extérieur non stérile est empêchée.

A sa partie inférieure 4, l'enceinte 1 est ouverte et surmonte une trémie 5 de forme asymétrique servant de collecteur de liquide, comme on le montrera plus loin. Cette trémie 5 est reliée par un conduit 6 à un égoût, un syphon (non montré) étant ménagé dans ce conduit 6.

Une mince bande continue 7 de matière thermoplastique, par exemple une bande formée d'une couche ou de plusieurs couches accolées de polyéthylène parcourt, dans l'enceinte 1, un trajet sinueux entre deux rouleaux inférieurs 8, 9 et un rouleau supérieur 10, ce dernier rouleau supérieur 10 étant situé à l'aplomb du rouleau inférieur 8 au voisinage du plafond 2. Les rouleaux inférieurs 8, 9 sont situés au voisinage de l'extrémité inférieure ouverte 4 de l'enceinte 1.

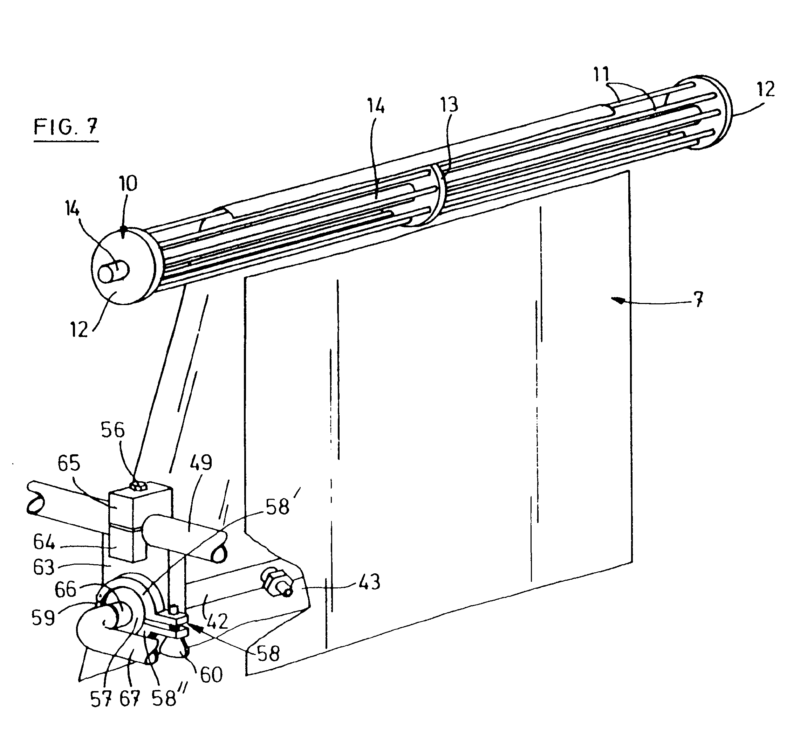

Les rouleaux 8, 9, 10 dont les axes sont horizontaux sont du type "cage d'écureuil" (voir fig.7). Ils comportent une série de barreaux 11 de section transversale circulaire reliés à chacune de leurs extrémités à un disque circulaire 12. A mi-longueur des barreaux 11, ceux-ci sont également reliés à un disque circulaire médian 11 servant à rigidifier les rouleaux 8, 9, 10. Les centres des disques 12 et 13 sont situés sur l'axe géométrique des rouleaux 8, 9, 10. Ces rouleaux 8, 9, 10 comportent un arbre longitudinal 14 solidaire des disques 12, 13, les extrémités de cet arbre 14, qui s'étendent à l'extérieur des rouleaux 8, 9, 10, étant supportées, de manière à permettre la libre rotation de ces rouleaux.

La bande 7 de matière thermoplastique, qui peut avoir une largeur de 40 à 60 cm ou davantage, passe dans l'enceinte dans le sens des flèches Y. Venant d'un rouleau extérieur de guidage 15, la bande 7 pénètre dans l'enceinte 1 par une entrée 16, munie d'un volet 17 en caoutchouc ou autre matière déformable, ce volet 17 faisant office d'obturateur limitant la sortie d'air pressurisé de l'enceinte. La bande 7 passe ensuite sur le rouleau de renvoi inférieur 8, qui tourne dans le sens dextrorsum. Du rouleau de renvoi inférieur 8, la bande suit un trajet vertical vers le rouleau supérieur 10 qui la renvoie, en tournant dans le sens sinistrorsum, vers le rouleau inférieur 9, en suivant un trajet incliné. Sur le tronçon vertical 18 situé entre les rouleaux de renvoi 8 et 10, la bande 7 est soumise à l'action de moyens de nettoyage et/ou de décontamination.

Ces moyens de nettoyage et/ou de décontamination sont constitués d'une première paire de rampes 19 munies de gicleurs 20. Ces rampes 19 reliées à une source d'eau déminéralisée pulvérisent, par leurs gicleurs 20, des jets d'eau déminéralisée sur les faces opposées de la bande 7, pendant que cette dernière se déplace vers le haut de l'enceinte 1 suivant un trajet sensiblement vertical. Comme on le voit à la figure 1, les gicleurs 20 des rampes 18 montées de part et d'autre du tronçon vertical 18 de la bande 7 sont orientés, de manière à former avec la bande un angle α qui peut varier entre 30 et 90°, de préférence entre 45 et 60°, les jets d'eau déminéralisée débités par ces gicleurs étant dirigés de manière générale, dans un sens (flèche Z) opposé à la direction d'avancement de la bande 7 entre les rouleaux de renvoi 8 et 10 (flèche verticale Y).

Au-dessus de la première paire de rampes 19 est montée une seconde paire de rampes 21 munies de gicleurs 22, ces derniers pulvérisant de l'eau distillée sur les faces opposées de la bande 7. L'orientation des gicleurs 22 peut être la même que celle des gicleurs de la première paire de rampes 19.

Grâce à la pulvérisation d'eau déminéralisée et d'eau distillée à un débit et sous une pression réglables, un effet dynamique de nettoyage et/ou de décontamination est exercé sur les faces opposées de la bande 7, de manière à débarrasser celle-ci, en majeure partie, des particules et des micro-organismes qui y adhèrent.

Les liquides pulvérisés sur la bande 7 ruissellent évidemment vers le bas sur le tronçon vertical 18 de la bande 7 et s'égouttent vers le fond 4 en entraînant avec eux les particules détachées de la bande 7.

Entre le rouleau de renvoi 10 et le rouleau de renvoi 9, la bande 7 suit un trajet incliné (tronçon 23) permettant un écoulement vers le bas des liquides résiduaires.

Après son passage sur le rouleau de renvoi 9, la bande 7 passe encore sur un rouleau de renvoi 24 également de type cage d'écureuil, après quoi elle pénètre dans une chambre de séchage 25 délimitée par des parois 26, 27, 28, cette chambre de séchage 25 étant montée dans l'enceinte 1 juste en amont d'une sortie 29 de celle-ci.

Dans la chambre de séchage 25 sont prévues, de part et d'autre de la bande 7, des rampes 30 munies d'ajutages 31 orientés vers la bande 7 dans une direction opposée (flèche Z) à celle d'un tronçon vertical 32 de cette bande 7. De l'air ou autre gaz stérile ou stérilisant est soufflé par les ajutages 31 sur la bande 7. La température de cet air et son débit à travers les ajutages 31 peuvent évidemment être réglés, de façon qu'en aval des rampes 30, la bande 7 soit parfaitement sèche.

L'emploi de rouleaux 8, 9, 10, 24 de type cage d'écureuil permet d'éviter l'accumulation sur ces rouleaux de particules ou micro-organismes détachés de la bande. Ces rouleaux sont eux-mêmes lavés dynamiquement par les liquides pulvérisés sur la bande 7.

La bande 7 séchée par les jets d'air ou de gaz débités par les ajutages 31 passe sur un rouleau de renvoi 33 (qui peut être un rouleau à surface cylindrique pleine), avant de quitter l'enceinte 1 par la sortie 29 de celle-ci.

Deux rouleaux 34, 35 montés au voisinage de la sortie 29 de l'enceinte 1, à l'extérieur de celle-ci, servent à entraîner la bande 7. Le rouleau 34 dont la surface cylindrique est en caoutchouc ou en matière analogue est entraîné par un moteur (non montré) et l'entraînement de la bande 7 s'effectue par pinçage entre ce rouleau moteur 34 et le rouleau 35.

En aval des rouleaux 34 et 35, la bande 7 passe sur un rouleau 36 porté par les bras parallèles 37 d'un levier pouvant pivoter autour d'un axe 38. Ce levier sert à maintenir la bande 7 sous tension en reprenant ou compensant la perte de tension causée par les arrêts périodiques du mouvement d'avancement de cette bande 7 notamment au poste de soudage (non montré) où s'effectue la fabrication par soudage de sachets et leur remplissage à l'aide d'un liquide de perfusion.

Il est évident qu'en amont de l'enceinte 1, la bande 7 acheminée vers ledit poste de fabrication de sachets est maintenue dans une atmosphère stérile, de façon à éviter sa recontamination.

Entre l'extrémité inférieure ouverte 4 de l'enceinte 1 et la trémie collectrice 5 est ménagé un intervalle 39 formant une fente de largeur réglable (comme on le verra plus loin). Cette fente 39 permet l'échappement de l'air stérile sous pression admis dans l'enceinte 1 par les perforations 3 ménagées dans son plafond 2. Au lieu de prévoir un intervalle entre l'extrémité inférieure 4 de l'enceinte et le bord libre de la trémie 5, on peut évidemment relier cette dernière de manière étanche à cette extrémité inférieure et ménager une fente d'échappement d'air soit dans la partie inférieure de l'enceinte 1, soit dans la partie supérieure de la trémie 5.

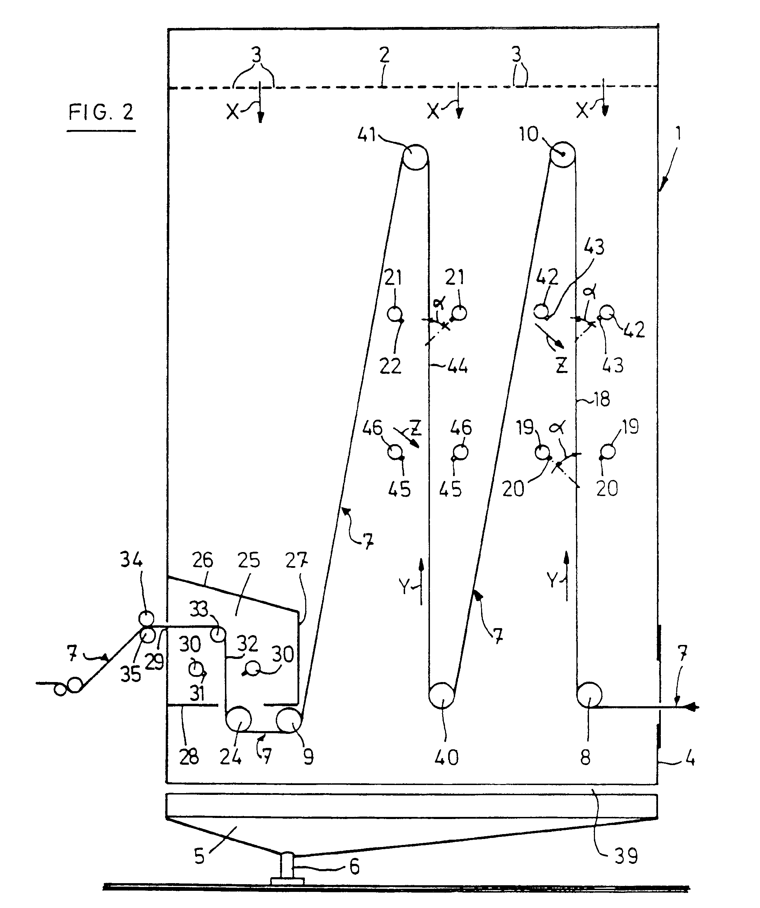

La seconde forme de réalisation du dispositif suivant l'invention, illustrée à la figure 2, est semblable à celle décrite ci-dessus en référence à la figure 1, si ce n'est que la bande 7 est amenée à passer, dans l'enceinte 1, sur un plus grand nombre de rouleaux de renvoi du type cage d'écureuil, de manière à suivre un trajet plus sinueux et que des moyens de nettoyage et/ou de décontamination supplémentaires sont prévus.

Ainsi, après avoir passé sur les rouleaux 8 et 10, la bande 7 est renvoyée, en suivant un trajet oblique, à un rouleau inférieur 40, d'où elle est renvoyée, en suivant un trajet vertical, vers un rouleau supérieur additionnel 41. La bande est enfin renvoyée de ce rouleau supérieur 41 au rouleau inférieur 9 en suivant à nouveau un trajet oblique.

Le dispositif selon la figure 2 comporte deux paires de rampes 19 et 42 munies chacune de gicleurs 20 et 43, les rampes de chacune de ces deux paires de rampes 19, 42 étant disposées de part et d'autre de la bande 7 le long du tronçon vertical 18 de celle-ci. Chacune de ces rampes 19 et 42 pulvérise par ses gicleurs (20, 43) de l'eau déminéralisée sur la bande 7.

Au surplus, sur le parcours vertical (tronçon 44) suivi par la bande 7 entre les rouleaux de renvoi 40 et 41, cette bande est d'abord soumise à l'action des 'jets d'eau déminéralisée débitée par des gicleurs 45 d'une paire de rampes 46, puis à l'action de jets d'eau distillée provenant des gicleurs 22 de la paire de rampes 21.

On voit ainsi que, sur son trajet ou tronçon vertical 18, la bande reçoit des jets d'eau déminéralisée des rampes 19 et 42, tandis que, sur son second trajet ou tronçon vertical 44, on pulvérise d'abord de l'eau déminéralisée par les rampes 46, puis de l'eau distillée par les rampes 21. Ainsi, on peut améliorer l'effet du traitement de nettoyage et/ou de décontamination de la bande de matière thermoplastique 7.

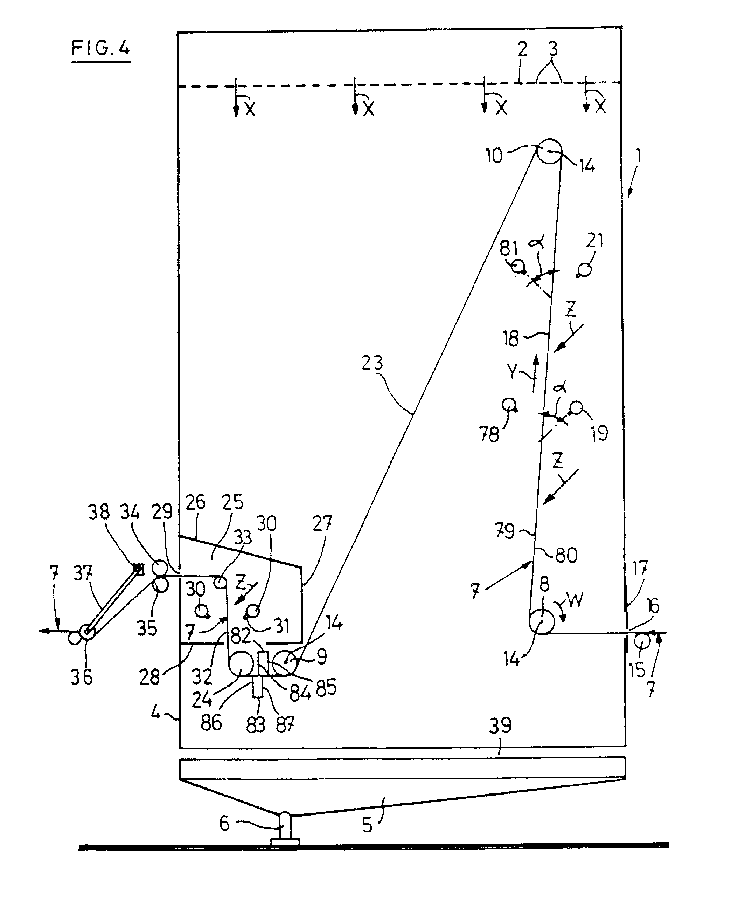

La troisième forme de réalisation, illustrée à la figure 4, du dispositif suivant l'invention diffère de celle montrée à la figure 1 par le fait que le tronçon 18 de la bande 7 situé entre le rouleau inférieur 8 et le rouleau supérieur 10 est incliné par rapport à la verticale dans la direction de rotation W du rouleau inférieur 8.

Du rouleau de renvoi inférieur 8, la bande suit un trajet incliné vers le rouleau supérieur 10 qui la renvoie, en tournant dans le sens sinistrorsum, vers le rouleau inférieur 9, en suivant un trajet incliné. Sur le tronçon incliné 18 situé entre les rouleaux de renvoi 8 et 10, la bande 7 est soumise à l'action des moyens de nettoyage et/ou de décontamination.

Ces moyens de nettoyage et/ou de décontamination sont constitués d'une première paire de rampes 19, 78. Ces rampes 19, 78, reliées à une source d'eau déminéralisée, pulvérisent des jets d'eau déminéralisée sur les faces opposées 79, 80 de la bande 7, pendant que cette dernière se déplace vers le haut de l'enceinte 1.

Au-dessus de la première paire de rampes 19, 78 est montée une seconde paire de rampes 21, 81, ces dernières pulvérisant de l'eau distillée sur les faces opposées 79, 80 de la bande 7.

Grâce à la pulvérisation d'eau déminéralisée et d'eau distillée à un débit et sous une pression réglables, un effet dynamique de nettoyage et/ou de décontamination est exercé sur les faces opposées de la bande 7, de manière à débarrasser celle-ci, en majeure partie, des particules et des micro-organismes qui y adhèrent.

Les rampes 78, 81 sont disposées de manière à permettre la pulvérisation dudit liquide sur la face 79 du tronçon incliné 18, cette face 79 étant opposée à la face 80 de la bande en contact avec le rouleau de renvoi inférieur 8. L'inclinaison du tronçon susdit 18 par rapport à la verticale est avantageusement comprise entre 5 et 30°.

Cette inclinaison permet aux liquides pulvérisés sur la face 79 du tronçon incliné 18 de ruisseler sur cette face en emportant les particules contaminantes vers le rouleau inférieur 8. Au voisinage de ce dernier, le liquide chargé de particules contaminantes se sépare de la bande 7 et tombe par gravité dans la trémie 5. Grâce à cette inclinaison, le liquide pulvérisé sur la face 79 reste en contact avec celle-ci. La surpression d'air stérile dans l'enceinte permet d'appliquer une force de contact supplémentaire du liquide sur cette face. Le liquide présent sur cette face est donc moins soumis à d'éventuels projections ou entraînements de liquides dus au courant d'air stérile ou à la formation de grosses gouttes sur la bande. Ceci permet d'éviter que du liquide chargé de particules contaminantes ne se redépose sur la face 79 d'une portion de la bande déjà nettoyée.

Après son passage sur le rouleau de renvoi 9, la bande 7 passe encore sur le rouleau de renvoi 24 également du type "cage d'écureuil", après quoi elle pénètre dans la chambre de séchage 25 délimitée par les parois 26, 27, 28, cette chambre de séchage 25 étant montée dans l'enceinte 1 juste en amont de la sortie 29 de celle-ci.

Entre les rouleaux 9 et 24, la bande est soumise à un préséchage grâce à deux systèmes 82, 83 munis de deux raclettes 84, 85 ; 86, 87. La raclette 84 du système 82 racle la portion de la bande comprise entre les raclettes 86, 87 de l'autre système 83.

Ces systèmes 82, 83 permettent d'éliminer presque totalement les liquides présents sur la bande avant que celle-ci n'entre dans la chambre de séchage 25 et facilitent ainsi le fonctionnement de cette chambre.

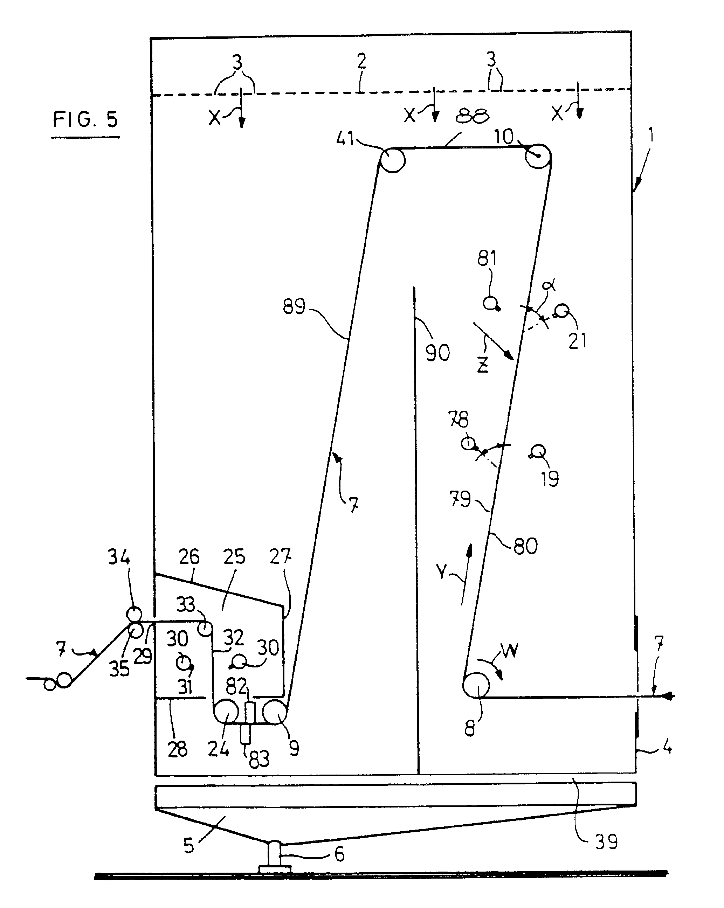

La quatrième forme de réalisation du dispositif suivant l'invention, illustrée à la figure 5, ne se différencie de la troisième que par le fait que le dispositif comporte deux rouleaux de renvoi 8, 9 distants l'un de l'autre à la partie inférieure de l'enceinte 1 et deux rouleaux de renvoi 10, 41 également espacés l'un de l'autre à la partie supérieure de l'enceinte 1, de façon qu'en passant sur ces divers rouleaux de renvoi, la bande de film présente trois tronçons successifs, à savoir un premier tronçon incliné 18 qui est soumis à la pulvérisation d'un ou plusieurs liquides de nettoyage et/ou de décontamination, un deuxième tronçon sensiblement horizontal 88 et un troisième tronçon 89, de préférence incliné.

Dans cette forme de réalisation, une cloison verticale 90 est placée dans l'enceinte entre le rouleau inférieur 8 et le rouleau inférieur 9, de manière à éviter que des particules emportées par ledit liquide de nettoyage et/ou de décontamination ne se redéposent sur la bande lorsque ce liquide se sépare de la bande et tombe dans la trémie 5.

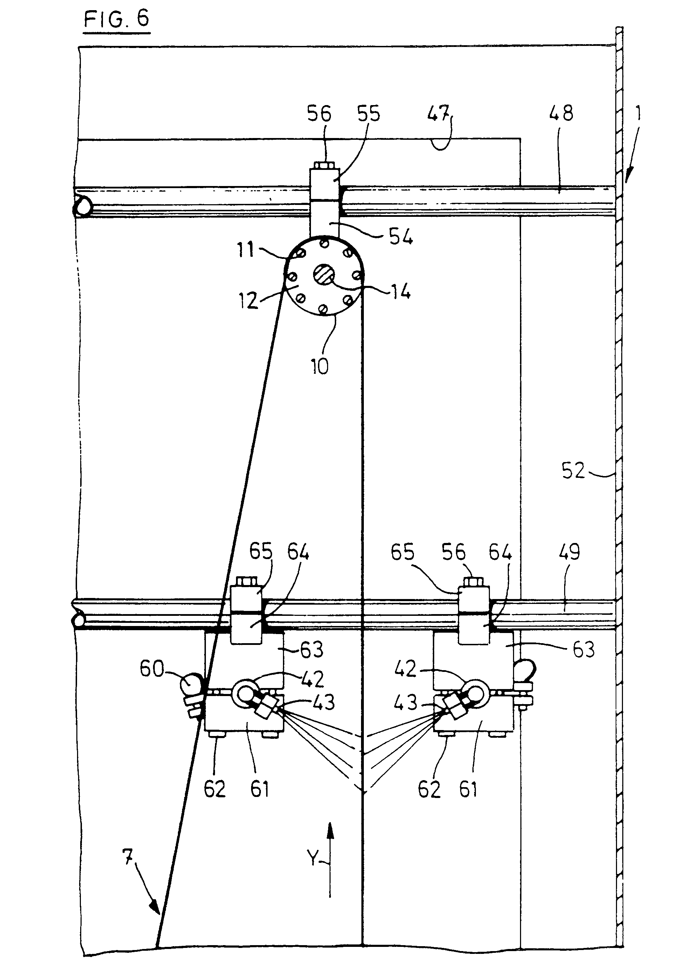

Les figures 6 et 7 des dessins ci-annexés montrent des détails de la forme de réalisation du dispositif suivant l'invention, schématisée à la figure 2.

Comme on le voit à la figure 6, l'enceinte 1 est constituée d'une armoire qui peut présenter sur deux faces opposées, parallèles à la direction d'avancement de la bande 7 de film thermoplastique, des portes vitrées 47 permettant de vérifier le fonctionnement du dispositif de nettoyage et d'accéder à l'intérieur de cette armoire, en cas de nécessité.

Des barres fixes 48, 49, 50, 51 qui peuvent être tubulaires et sont montées parallèlement l'une à l'autre, à l'intérieur de l'enceinte 1, sont suspendues à la paroi d'amont 52 et à la paroi d'aval 53 de celle-ci. A chacune de ces barres 48 à 51, s'étendant à l'avant de l'enceinte 1, correspond une barre à l'arrière de cette enceinte. On prévoit ainsi dans l'enceinte 1 quatre paires de barres fixes 48 à 51, auxquelles est suspendu l'équipement contenu dans l'armoire.

A la paire de barres fixes 48 sont suspendus les rouleaux de renvoi supérieurs 10 et 41, dont les arbres 14 peuvent tourner librement dans des trous ménagés dans des pattes 54 fixées à des cavaliers 55 accrochés aux barres 48, au moyen de boulons 56. Grâce à cet agencement, les positions des rouleaux de renvoi 10 et 41 peuvent éventuellement être modifiées, en les écartant plus ou moins l'une de l'autre, par simple coulissement des cavaliers 55 sur les barres 48.

A la paire de barres fixes 49 sont suspendues les paires de rampes de section circulaire 21 et 42. A chaque extrémité, chacune de ces rampes présente une partie cylindrique 57 de plus grand diamètre, sur laquelle est serré un collier de serrage 58, formé de deux branches semi-circulaires 58' et 58" articulées l'une à l'autre en 59 à une de leurs extrémités et munies d'un écrou à papillon 60 à leur autre extrémité. La branche 58' des colliers de serrage 58 est solidaire d'une première pièce 61 de forme polygonale qui est fixée par des boulons 62 à une seconde pièce polygonale 63. Les pièces 61 et 63 présentent chacune le long de leurs bords une échancrure semi-circulaire qui enserre la rampe. Chaque plaquette formée par les pièces 61 et 63 est suspendue à une patte 64 fixée de manière amovible à un cavalier 65 suspendu à l'une des barres 49.

Lorsque des colliers 58 sont desserrés par dévissage des écrous, on peut modifier l'orientation des gicleurs 22, 43 portés par les rampes 21, 42, en faisant tourner celles-ci autour de leur axe longitudinal. Quant aux pièces 61 et 63 formant les plaquettes, elles peuvent être désolidarisées l'une de l'autre par dévissage des boulons 62, de façon à permettre un déplacement longitudinal des rampes 21, 42 par rapport à une tubulure 66 dans laquelle chaque rampe est engagée télescopiquement. Sur la tubulure 66 qui sert à alimenter en liquide de nettoyage les rampes de chaque paire de rampes 21, 42 est branchée une autre tubulure 67 à laquelle est relié télescopiquement un tuyau 68, relié à une source (non montrée) d'un liquide de nettoyage. Un collier de serrage 69, analogue au collier précité 58, sert à serrer l'extrémité du tuyau 68 sur l'extrémité adjacente de la tubulure 67.

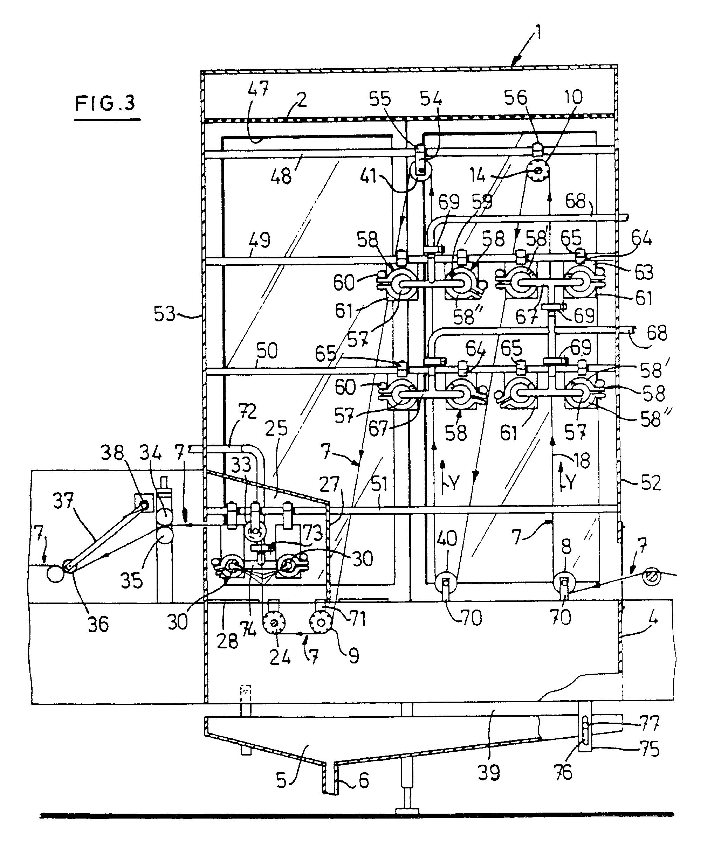

Les moyens de suspension et d'alimentation dés diverses rampes sont les mêmes que ceux décrits ci-avant et sont désignés aux figures 3, 6 et 7 par les mêmes notations de référence. Le tuyau 68 relié à une source d'eau déminéralisée (non montrée) alimente les paires de rampes 19, 42 et 46, tandis qu'un autre tuyau 68 relié à une source d'eau distillée (non montrée) alimente les rampes 21.

L'arbre des rouleaux de renvoi inférieurs 8, 40, 9 et 27 peut tourner librement dans un trou ménagé dans des pattes 70, 71 fixées au châssis de l'armoire 1.

Les barres fixes 50 supportent, de la même manière que les barres fixes 49, les paires de rampes 19 et 46.

Enfin, les barres fixes 51 servent de support aux rampes de séchage 30. Un tuyau 72, relié à une source d'air de séchage stérile sous pression (non montrée), est serré par un collier de serrage amovible 73 sur une première tubulure 74 branchée sur une autre tubulure alimentant par chacune de ses extrémités les rampes de séchage 30. L'orientation des gicleurs des rampes 30, ainsi que la position longitudinale de ces dernières, peuvent être modifiées par des moyens (collier de serrage 58, pièces 61, 63, pattes 64 et cavalier 65) identiques à ceux utilisés pour les diverses rampes 19, 21, 42 et 46 de pulvérisation de liquides.

Comme le montre la figure 3, des pattes 75 fixées à une extrémité à la partie inférieure de l'armoire 1 présentent une boutonnière 76 livrant passage à un boulon fixé à la partie supérieure de la trémie collectrice 5. Sur ce boulon est vissé un écrou 77. Ce système permet de régler le niveau du bord supérieur de la trémie 5 et, par conséquent, la largeur de la fente 39, par laquelle peut s'échapper l'air stérile sous pression envoyé dans l'enceinte 1 par les perforations 3 du plafond 2 de celle-ci.

Des tests de lavage et de décontamination de films par un dispositif selon la figure 4 suivant la présente invention ont montré pour une bande constituée d'une couche de polyéthylène haute densité et d'une couche de polyéthylène basse densité les observations suivantes :

1. Le nettoyage de la face (79) de la bande en polyéthylène basse densité qui constituait la face interne de poches de perfusion a permis d'obtenir des poches de liquide de perfusion contenant peu de particules submicroniques, celles-ci provenant essentiellement des particules présentes sur cette face. Ainsi, avec le dispositif suivant l'invention, il a été possible de réduire le nombre de particules submicroniques (de 2 à 5 microns) à moins de 250 particules, voire même à moins de 60 particules, par ml de liquide de perfusion. Cette faible concentration en particules permet de répondre aux seuils de concentration admis par divers organismes de la santé, ces seuils étant généralement compris entre 500 à 1000 particules submicroniques de 2 microns par ml de liquide de perfusion.

2. Les moyens de préséchage 82, 83 permettent de réduire par trois la consommation d'air nécessaire au séchage dans la chambre 25 par rapport à la consommation nécessaire dans un dispositif dans lequel ces moyens ne sont pas montés.

Cette moindre consommation permet également de réduire de façon appréciable le niveau du bruit dans la chambre 25.

**Revendications**

1. Dispositif de nettoyage et/ou de décontamination d'une bande continue (7) d'un film thermoplastique, ce dispositif comprenant une enceinte (1) dans laquelle la bande continue (7) est amenée à se déplacer selon un trajet sinueux autour de rouleaux de renvoi (8, 9, 10, 40, 41) entre une entrée (16) et une sortie (29) de l'enceinte (1), au moins une rampe (19, 21, 42, 46, 78, 81) sensiblement horizontale munie de gicleurs (20, 22, 43, 45) étant montée dans l'enceinte (1) susdite de manière à permettre de pulvériser sur au moins une face de la bande des jets d'un liquide de nettoyage et/ou de décontamination, ce liquide chargé de particules contaminantes détachées de la bande (7) s'égouttant dans un collecteur (5) dont est munie l'enceinte (1) à sa partie inférieure, l'enceinte (1) étant maintenue sous une pression d'air stérile, caractérisé en ce que l'enceinte (1) présente une fente (39) de largeur réglable servant à l'échappement contrôlé de l'air admis dans l'enceinte (1) par le plafond (2) de celle-ci, cette fente (39) étant ménagée entre l'extrémité inférieure (4) de l'enceinte (1) et le collecteur (5).

2. Dispositif suivant la revendication 1, caractérisé en ce qu'il comporte deux rouleaux de renvoi (8, 9) distants l'un de l'autre à la partie inférieure de l'enceinte (1), et deux rouleaux de renvoi (10, 41) également espacés l'un de l'autre à la partie supérieure de l'enceinte (1), de façon qu'en passant sur ces divers rouleaux de renvoi, la bande (7) de film présente trois tronçons successifs, à savoir un premier tronçon incliné (80) qui est soumis à la pulvérisation d'un ou de liquides de nettoyage et/ou de décontamination, un deuxième tronçon sensiblement horizontal (88) et un troisième tronçon sensiblement vertical ou légèrement incliné (89).

3. Dispositif suivant l'une quelconque des revendications 1 et 2, caractérisé en ce que les gicleurs (20, 22, 43, 45) de la ou des rampes sont inclinés vers la bande (7) de film, de manière à former avec celle-ci un angle de 30 à 90°, de préférence, 45 à 60°.

4. Dispositif suivant l'une quelconque des revendications 1 à 3, caractérisé en ce qu'il comporte des moyens (58) pour régler l'orientation des gicleurs (20, 22, 43, 45) de la ou de chaque rampe (19, 21, 42, 46, 78, 81).

5. Dispositif suivant la revendication 1, caractérisé en ce qu'il comporte des moyens (61, 63, 66) pour régler la position longitudinale et/ou la position transversale et/ou le niveau de la ou de chaque rampe (19, 21, 42, 46, 78, 81).

6. Dispositif suivant l'une quelconque des revendications précédentes, caractérisé en ce que l'enceinte (1) présente un plafond (2) présentant des perforations (3) livrant passage à de l'air stérile et est pourvue d'un collecteur (5) sous forme de trémie pour le ou les liquides pulvérisés sur la bande, la fente (39) de largeur réglable étant située entre un bord inférieur de l'enceinte (1) et un bord supérieur de la trémie (5), ladite fente permettant l'échappement, à un débit prédéterminé, de l'air contenu dans l'enceinte (1), de sorte qu'une circulation d'air soit établie dans celle-ci.

7. Dispositif suivant l'une quelconque des revendications précédentes, caractérisé en ce que les rouleaux de renvoi (8, 9, 10, 40, 41) comportent une série de barreaux (11) de section transversale circulaire reliés à chacune de leurs extrémités à un disque circulaire (12, 13) et un arbre (14) est solidaire des disques (12, 13), les extrémités de cet arbre s'étendant à l'extérieur des rouleaux (8, 9, 10, 40, 41) étant supportées de manière à permettre la libre rotation desdits rouleaux (8, 9, 10, 40, 41).

## Ansprüche

1. Vorrichtung zum Reinigen und/oder Dekontaminieren eines durchlaufenden Bandes (7) aus thermoplastischer Folie, mit einem Gehäuse (1), in das das durchlaufende Band (7) eingeführt wird, um sich entlang eines sinusförmigen Weges um Umlenkrollen (8, 9, 10, 40, 41) herum zwischen einem Eintritt (16) und einem Austritt (29) des Gehäuses (1) zu bewegen, zumindest einem im wesemtlichen horizontalen, mit Spritzdüsen (20, 22, 43, 45) versehenen Träger (19, 21, 42, 46, 78, 81), der so im obengenannten Gehäuse (1) angebracht ist, daß auf zumindest eine Fläche des Bandes Flüssigkeitsstrahlen zum Reinigen und/oder Dekontaminieren gesprüht werden können, wobei die mit von dem Band (7) abgelösten Schmutzpartikeln beladene Flüssigkeit in einen Sammelbehälter (5) tropft, der im unteren Teil des Gehäuses (1) angeordnet ist, und wobei das Gehäuse (1) mit steriler Luft unter Druck gesetzt ist, dädurch **gekennzeichnet**, daß das Gehäuse (1) einen Spalt (39) von regelbarer Breite aufweist, der dem geregelten Entweichen von in-das Gehäuse (1) durch seine Decke (2) geführter Luft dient, wobei dieser Spalt (39) zwischen dem unteren Ende (4) des Gehäuses (1) und dem Sammelbehälter (5) angeordnet ist.

2. Vorrichtung nach Anspruch 1, dadurch **gekennzeichnet**, daß sie zwei voneinander entfernt angeordnete Umlenkrollen (8, 9) im unteren Bereich des Gehäuses (1), und zwei ebenfalls voneinander entfernt angeordnete Umlenkrollen (10, 41) im oberen Bereich des Gehäuses (1) aufweist, dergestalt, daß das aus Folie bestehende Band (7) beim Weg über diese verschiedenen Umlenkrollen drei aufeinanderfolgende Abschnitte durchläuft, nämlich einen ersten geneigten Abschnitt (80), in dem es der Besprühung durch eine oder mehrere Flüssigkeiten zum Reinigen und/oder Dekontaminieren unterzogen wird, einen zweiten im wesentlichen horizontalen beschnitt (88) und einen dritten im wesentlichen vertikalen oder leicht geneigten beschnitt (89).

3. Vorrichtung nach einem der Ansprüche 1 oder 2, dadurch **gekennzeichnet**, daß die Spritzdüsen (20, 22, 43, 45) des oder der Träger zum aus Folie bestehenden Band (7) so geneigt sind, daß sie mit ihm einen Winkel zwischen 30° und 90°, vorzugsweise 45° bis 60° bilden.

4. Vorrichtung nach einem der vorhergehenden Ansprüche 1 bis 3, dadurch **gekennzeichnet**, daß sie Einrichtungen (58) zum Einstellen der Richtung der Spritzdüsen (20, 22, 43, 45) des oder eines jeden Trägers (19, 21, 42, 46, 78, 81) aufweist.

5. Vorrichtung nach Anspruch 1, dadurch **gekennzeichnet**, daß sie Einrichtungen (61, 63, 66) zum Einstellen der Längs- und/oder Querlage und-/oder für die Höhenlage des oder eines jeden Trägers (19, 21, 42, 46, 78, 81) aufweist.

6. Vorrichtung nach einem der vorhergehenden Ansprüche, dadurch **gekennzeichnet**, daß das Gehäuse (1) eine Decke (2) mit einer Lochung (3) aufweist, welche einen Durchgang für die sterile Luft schafft, und ein trichterförmiger Sammelbehälter (5) für die auf das Band gesprühte Flüssigkeit oder Flüssigkeiten vorgesehen ist, wobei der Spalt (39) von regelbarer Breite zwischen einem unteren Rand des Gehäuses (1) und einem oberen Rand des Trichters (5) angeordnet ist, und der genannte Spalt das Entweichen einer im voraus festgelegten Menge von im Gehäuse (1) enthaltener Luft gestattet, so daß sich eine Luftzirkulation in diesem ausbildet.

7. Vorrichtung nach einem der vorhergehenden Ansprüche, dadurch **gekennzeichnet**, daß die Umlenkrollen(8, 9, 10, 40, 41) mehrere Stäbe (11) mit kreisförmigem Querschnitt aufweisen, die an jedem ihrer Enden mit einer kreisförmigen Scheibe (12, 13) verbunden sind und eine Welle (14) einstückig mit den Scheiben (12, 13) ausgeführt ist, wobei die Enden dieser Welle sich über die Umlenkrollen (8, 9, 10, 40, 41) hinauserstrecken und so abgestützt sind, daß ein ungehindertes Drehen der genannten Rollen (8, 9, 10, 40, 41) ermöglicht ist.

## Claims

1. Device for cleaning and/or decontaminating a continuous strip (7) of thermoplastic film, said device comprising an enclosure (1) in which the continuous strip (7) is made to move along a sinuous trajectory around return rollers (8, 9, 10, 40, 41) between an inlet (16) and an outlet (29) of the enclosure (1), at least one substantially horizontal ramp (19, 21, 42, 46, 78, 81) equipped with nozzles (20, 22, 43, 45) being mounted in the enclosure (1) for spraying at least on one face of the strip (7) jets of a cleaning and/or decontaminating liquid, said liquid loaded with contaminating particles detached from the strip (7) being allowed to drip to a collector (5) with which is provided the enclosure (1) at its lower part, the enclosure (1) being maintained under pressure of sterile air, characterized in that the enclosure (1) has a slit (39) of adjustable width for controlling the release of the air introduced into the enclosure (1) by the ceiling (2) thereof, said slit (39) being located between the lower end (4) of the enclosure (1) and the collector (5).

2. Device according to claim 1, characterized in that it comprises two return rollers (8, 9) distant from each other at the lower part of the enclosure (1), and two return rollers (10, 41) also distant from each other at the upper part of the enclosure (1), so that, when passing on said return rollers, the strip (7) of the film has three successive sections, namely a first inclined section (80) which is submitted to the pulverization of cleaning and/or decontaminating liquid(s), a second substantially horizontal section (88) and a third substantially vertical or slightly inclined section (89).

3. Device according to anyone of claims 1 and 2, characterized in that the nozzles (20, 22, 43, 45) of the ramp(s) are inclined in the direction of the strip (7) of film, so as to made with this an angle of 30 to 90°, preferably 45 to 60°.

4. Device according to anyone of the preceding claims, characterized in that it comprises means (58) for adjusting the orientation of the nozzles (20, 22, 43, 45) of the or each ramp (19, 21, 42, 46, 78, 81).

5. Device according to claim 1, characterized in that it comprises means (61, 63, 66) for adjusting the longitudinal and/or transversal position and/or the level of the or each ramp (19, 21, 42, 46, 78, 81).

6. Device according to anyone of the preceding claims, characterized in that the enclosure (1) has a ceiling (2) with openings (3) for sterile air and is provided with a collector (5) in the form of an hopper for the liquid(s) pulverized on the strip, the slit (39) of adjustable width being located between a lower edge of the enclosure (1) and an upper edge of the hopper (5), said slit allowing the outlet, at a predetermined flow rate, of the air contained into the enclosure (1), so that an air flow is established therein.

7. Device according to anyone of the preceding claims, characterized in that the return rollers (8, 9, 10, 40, 41) comprises a plurality of bars (11) with a circular cross section bound at each of their ends to a circular disc (12, 13) and a shaft (14) is fixed on the disc (12, 13), the ends of said shaft stretching at the outside of the rollers (8, 9, 10, 40, 41) being mounted so as to allow the free rotation of said rollers (8, 9, 10, 40, 41).

FIG. 1

FIG. 2

FIG.3

FIG.4

FIG. 5

## FIG. 6

FIG. 7

EP 0 270 653 B1